# EUROPEAN PATENT APPLICATION

(11) **EP 1 120 300 A2**
(43) Date of publication of application: **01.08.2001**
(21) Application number: 00311088.9
(22) Date of filing: 13.12.2000
(51) Int. Cl.: B60H 1/00

(54) **Air conditioning system for automotive vehicles**

(30) Priority: 28.01.2000 JP 2000019485
(71) Applicant: Zexel Valeo Climate Control Corporation, Ohsato-gun, Saitama 360-0193 (JP)
(72) Inventor: Nagano, Hideki, Zexel Valeo Climate Control Corp., Osato-gun, Saitama (JP)
(74) Representative: Britter, Keith Palmer

(57) **Abstract**

An air conditioning system for an automotive vehicle has high heating power and includes an intake duct (1) formed with a port (8), a blower unit (2) for drawing air from a vehicle compartment via the intake duct (1), and an air conditioning unit (3) including a heater core (17) utilizing engine coolant as a heat source thereof for heating air from the blower unit (2). The air conditioning unit (3) can be disposed below a vehicle floor, whilst the intake duct (1) is disposed above the vehicle floor. Further, an electric heater (9) is disposed within the intake duct (1), as an auxiliary heat source.

## Description

### BACKGROUND OF THE INVENTION

### Field of the Invention

This invention relates to an air conditioning system for an automotive vehicle, and more particularly to an air conditioning system installed behind a front seat of a so-called one-box vehicle.

### Description of the Prior Art

A conventional air conditioning system installed behind a front seat of a one-box vehicle is comprised of an intake duct, a blower unit for drawing air from the compartment of the vehicle via the intake duct, an air conditioning unit for conditioning the air taken in by the blower unit, a vent duct via which the air which has passed through the air conditioning unit is blown out from a top side of the vehicle compartment, and a foot duct via which the air which has passed through the air conditioning unit is blown out from a bottom side of the vehicle compartment.

The blower unit and the air conditioning unit are disposed below the floor of the vehicle, while the intake duct, the vent duct and the foot duct are disposed above the vehicle floor.

The blower unit includes a fan, and a motor for driving the fan.

The air conditioning unit is comprised of an evaporator, a heater core, an air-mixing door, a mode-switching door, and an air conditioning unit casing accommodating these components.

The evaporator is arranged at a location upstream of the heater core.

The heater core is a heat exchanger utilizing engine coolant as its heat source. Connected to the heater core are two hot water pipes, i.e. an inlet pipe via which the engine coolant flows into the heater core and an outlet pipe via which the engine coolant flows out from the heater core. The two hot water pipes are connected to a water jacket of the engine, which is located below the front seat.

The air-mixing door is mounted between the evaporator and the heater core.

Within the air conditioning unit casing, there are formed a cold air bypass passage through which air from the evaporator flows, a hot air passage through which air from the heater core flows, and an air-mixing space in which the air from downstream of the cold air bypass passage and the air from downstream of the hot air passage are mixed with each other.

The air-mixing space is located downstream of the air-mixing door. The air conditioning unit casing has a vent outlet port and a foot outlet port each formed at a location downstream of the air-mixing space. The mode-switching door is mounted at a location upstream of these two outlet ports.

When the motor drives the fan, air is introduced into the intake duct from the vehicle compartment and flows toward the air conditioning unit.

When an outlet mode is set to a bi-level mode in which the degree of opening of the air-mixing door is 50%, part of the air which has passed through the evaporator flows toward the air-mixing space via the cold air bypass passage, while the rest of the air flows toward the heater core. The air passing through the evaporator is cooled.

The air which has passed through the heater core flows toward the air-mixing space via the hot air passage. Between the heater core and the water jacket, the engine coolant circulates through the hot water pipes. The air passing through the heater core is heated.

The air from downstream of the cold air bypass passage and the air from downstream of the hot air passage flow into each other in the air-mixing space to be mixed and blown out of the unit casing via the vent outlet port and the foot outlet port. The two flows of air from the unit casing pass through the vent duct and the foot duct, respectively, to be blown into the vehicle compartment.

The heater core is a heat exchanger utilizing engine coolant as its heat source, as described above. However, since the heater core arranged below a rear seat in the vehicle compartment is located remote from the water jacket arranged below the front seat, the engine coolant dissipates heat while flowing from the water jacket to the heater core, and as a result, the temperature of the engine coolant within the heater core is lowered.

Further, the engine coolant circulates over a long distance between the water jacket and the heater core via the piping, and hence there is a large pressure loss, which reduces the rate of circulation of the engine coolant.

Particularly in a so-called hybrid vehicle equipped with an internal combustion engine and a motor, the temperature of the engine coolant falls because the engine stops when its drive source is switched from the engine to the motor. Therefore, the heating power of the heater core utilizing the engine coolant as its heat source is reduced.

As described above, the conventional air conditioning system suffers from the problem that the heating power of the heater core is reduced due to a drop of the engine coolant temperature and a decrease in the rate of circulation of the engine coolant.

### SUMMARY OF THE INVENTION

It is an object of the invention to provide an air conditioning system for an automotive vehicle, which has a high heating power.

To attain the above object, according to a first aspect of the invention, there is provided an air conditioning system for an automotive vehicle having a compartment and a floor, the air conditioning system including an intake duct formed with a recirculating air intake port for taking in air from the compartment, a blower unit for drawing the air from the compartment via the intake duct, and an air conditioning unit, the air conditioning unit having a heat exchanger utilizing engine coolant as a heat source thereof for heating the air from the blower unit.

The air conditioning system according to the first aspect of the invention is characterized in that the intake duct is disposed above the floor;
the air conditioning unit is disposed below the floor; and
an electric heater is arranged within the intake duct, as an auxiliary heat source.

According to this air conditioning system, an electric heater is arranged within the intake duct, as an auxiliary heat source. Therefore, the air conditioning system has an increased heating power, and hence is capable of exhibiting higher heating performance. Further, since the intake duct having the electric heater arranged therein is located above the vehicle floor, it is possible to remove and mount the electric heater alone without removing the air conditioning system from the vehicle, e.g. when it is required to carry out maintenance of the heater core.

Preferably, the intake duct is formed with an opening via which the electric heater is mounted and removed.

To attain the above object, according to a second aspect of the invention, there is provided an air conditioning system for an automotive vehicle having a compartment and a floor, the air conditioning system including an air conditioning unit, the air conditioning unit having a heat exchanger utilizing engine coolant as a heat source thereof, a unit casing accommodating the heat exchanger, a vent outlet port and a foot outlet port formed in the unit casing, and a vent-foot switching door for opening and closing the vent outlet port and the foot outlet port, a vent duct connected to the vent outlet port, for guiding air blown out from the vent outlet port to the compartment, and a foot duct connected to the foot outlet port, for guiding air blown out from the foot outlet port to the compartment.

The air conditioning system according to the second aspect of the invention is characterized in that the air conditioning unit is disposed below the floor, and
an electric heater is arranged within the foot duct, as an auxiliary heat source.

According to this air conditioning system, the electric heater is arranged in the foot duct. Therefore, the air conditioning system has an increased heating power, and hence is capable of exhibiting higher heating performance. Further, the electric heater is not positioned on an air path in the fully cooling mode, providing no airflow resistance due to presence thereof in this mode. This prevents degradation of cooling capability of the air conditioning system.

Preferably, the foot duct has a downstream portion arranged above the floor, and the electric heater is disposed within the downstream portion of the foot duct.

According to this preferred embodiment, the downstream portion of the foot duct is located above the vehicle floor and has the electric heater disposed therein, so that e.g. when it is required to carry out maintenance of the heater core, it is possible to remove and mount the electric heater alone without removing the air conditioning system from the vehicle.

Alternatively, the foot duct has an upstream portion arranged below the floor and a downstream portion arranged above the floor, and the electric heater is disposed within the upstream portion of the foot duct, the upstream portion of the foot duct being formed with an opening via which the electric heater is mounted and removed.

According to this preferred embodiment, the upstream portion of the foot duct located below the vehicle floor is formed with the opening via which the electric heater is mounted and removed, so that e.g. when it is required to carry out maintenance of the electric heater, it is possible to remove and mount the electric heater alone without removing the air conditioning system from the vehicle.

To attain the above object, according to a third aspect of the invention, there is provided an air conditioning system for an automotive vehicle having a compartment and a floor, the air conditioning system including an air conditioning unit, the air conditioning unit having a heat exchanger utilizing engine coolant as a heat source thereof, a unit casing accommodating the heat exchanger, a vent outlet port and a foot outlet port formed in the unit casing, and a vent-foot switching door for opening and closing the vent outlet port and the foot outlet port, a vent duct connected to the vent outlet port, for guiding air blown out from the vent outlet port to the compartment, and a foot duct connected to the foot outlet port, for guiding air blown out from the foot outlet port to the compartment.

The air conditioning system according to the third aspect of the invention is characterized in that the air conditioning unit is disposed below the floor, and
an electric heater is combined as an auxiliary heat source with the heat exchanger to form a one-piece assembly.

According to this air conditioning system, the electric heater is combined with the heating heat exchanger. Therefore, the air conditioning system has an increased heating power and hence is capable of exhibiting higher heating performance. Further, in assembling the air conditioning system for the vehicle, it is not required to carry out operation of mounting the electric heater in the unit casing separately from operation of mounting the heat exchanger in the same. This facilitates the assembly work of the air conditioning system.

To attain the above object, according to a fourth aspect of the invention, there is provided an air conditioning system for an automotive vehicle having a compartment and a floor, the air conditioning unit including a blower unit for drawing air from the compartment, an air conditioning unit, the air conditioning unit having a heat exchanger utilizing engine coolant as a heat source thereof for heating the air sent from the blower unit, a unit casing accommodating the heat exchanger, a vent outlet port and a foot outlet port formed in the unit casing, and a vent-foot switching door for opening and closing the vent outlet port and the foot outlet port, a vent duct connected to the vent outlet port, for guiding air blown out from the vent outlet port to the compartment, and a foot duct connected to the foot outlet port, for guiding air blown out from the foot outlet port to the compartment.

The air conditioning system according to the fourth aspect of the invention is characterized in that the blower unit, the air conditioning unit, the vent duct, and the foot duct are disposed above the floor, and
an electric heater is arranged in one of the blower unit, the air conditioning unit, the vent duct, and the foot duct, as an auxiliary heat source.

According to this air conditioning system, the electric heater is installed in one of the blower unit, the air conditioning unit, the vent duct, and the foot duct all located above the vehicle floor. Therefore, the air conditioning system has an increased heating power, and hence is capable of exhibiting higher heating performance. Further, it is possible to remove and mount the electric heater alone without removing the air conditioning system from the vehicle, e.g. when it is required to carry out operation of maintenance of the electric heater.

Preferably, the electric heater is disposed within the blower unit.

According to this preferred embodiment, the blower unit is disposed above the floor and has the electric heater disposed therein, so that e.g. when it is required to carry out operation of maintenance of the electric heater, it is possible to remove and move the electric heater alone from and in the blower unit without removing the air conditioning system from the vehicle, which facilitates the operation of maintenance of the electric heater.

Alternatively, the electric heater is disposed within the foot duct.

According to this preferred embodiment, since the electric heater is disposed within the foot duct and not positioned on an air path in the fully cooling mode, airflow resistance due to presence of the electric heater cannot be incurred. This prevents degradation of cooling performance of the air conditioning system.

More preferably, the compartment has a side panel, and the blower unit, the air conditioning unit, the vent duct and the foot duct are arranged within the side panel.

To attain the above object, according to a fifth aspect of the invention, there is provided an air conditioning system for an automotive vehicle having a compartment and a floor, the air conditioning system including a blower unit for drawing air from the compartment, an air conditioning unit, the air conditioning unit having a heat exchanger utilizing engine coolant as a heat source thereof for heating air sent from the blower unit, a unit casing accommodating the heat exchanger, a vent outlet port and a foot outlet port formed in the unit casing, and a vent-foot switching door for opening and closing the vent outlet port and the foot outlet port, a vent duct connected to the vent outlet port, for guiding air blown out from the vent outlet port to the compartment, and a foot duct connected to the foot outlet port, for guiding air blown out from the foot outlet port to the compartment.

The air conditioning system according to the fifth aspect of the invention is characterized in that the air conditioning unit is disposed above the floor, and
an electric heater is combined as an auxiliary heat source with the heat exchanger to form a one-piece assembly.

According to this air conditioning system, the electric heater is combined with the heating heat exchanger. Therefore, the air conditioning system has an increased heating power, and hence is capable of exhibiting higher heating performance. Further, in assembling the air conditioning system, it is not required to carry out operation of mounting the electric heater in the unit casing separately from operation of mounting the heating heat exchanger in the same. This facilitates the assembly work of the system.

Preferably, the blower unit, the vent duct, and the foot duct are also disposed above the floor.

More preferably, the compartment has a side panel, and the blower unit, the air conditioning unit, the vent duct and the foot duct are arranged within the side panel.

The above and other objects, features and advantages of the present invention will become more apparent from the following detailed description taken in conjunction with accompanying drawings.

### BRIEF DESCRIPTION OF THE DRAWINGS

FIG. 1 is a conceptual representation of an air conditioning system for an automotive vehicle, according to a first embodiment of the invention;
FIG. 2 is a side view of a one-box vehicle on which the FIG. 1 air conditioning system is installed;
FIG. 3 is a rear view of the FIG. 2 one-box vehicle;
FIG. 4 is an enlarged view showing part of the one-box vehicle, which is useful in explaining a procedure of removing an electric heater from and mounting the same in an intake unit;
FIG. 5 is a conceptual representation of an air conditioning system for an automotive vehicle, according to a second embodiment of the invention;
FIG. 6 is a conceptual representation of an air conditioning system for an automotive vehicle, according to a third embodiment of the invention;
FIG. 7 is a conceptual representation of an air conditioning system for an automotive vehicle, according to a fourth embodiment of the invention;
FIG. 8 is a perspective view of a heater core combined with an electric heater;
FIG. 9 is a conceptual representation of an air conditioning system for an automotive vehicle, according to a fifth embodiment of the invention;
FIG. 10 is a side view of a one-box vehicle on which the FIG. 9 air conditioning system is installed;
FIG. 11 is a rear view of the FIG. 10 one-box vehicle;
FIG. 12 is a conceptual representation of an air conditioning system for an automotive vehicle, according to a sixth embodiment of the invention; and
FIG. 13 is a conceptual representation of an air conditioning system for an automotive vehicle, according to a seventh embodiment of the invention.

### DETAILED DESCRIPTION OF THE PREFERRED EMBODIMENTS

The invention will now be described in detail with reference to the drawings showing preferred embodiments thereof.

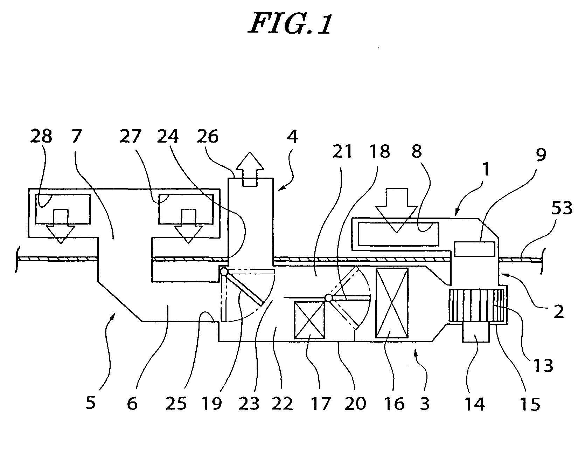

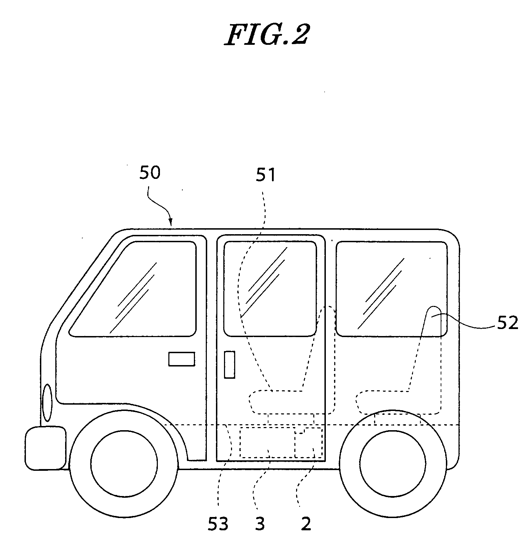

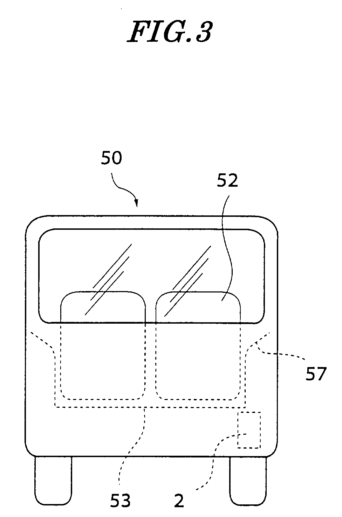

FIG. 1 is a conceptual representation of an air conditioning system installed on an automotive vehicle, according to a first embodiment of the invention. FIG. 2 is a side view of a one-box vehicle, while FIG. 3 is a rear view of the same.

The one-box vehicle 50 is a so-called hybrid vehicle equipped with an internal combustion engine, not shown, and a motor, not shown. Further, the one-box vehicle 50 has an air conditioning system installed on the side of a front seat (not shown) thereof, and another air conditioning system installed on the side of rear seats (a second seat 51 and a third seat 52) thereof.

The front seat-side air conditioning system is arranged under the front seat, while the rear seat-side air conditioning system is arranged behind the front seat.

As shown in FIG. 1, the rear seat-side air conditioning system is comprised of an intake duct 1, a blower unit 2 for drawing air from the compartment of the vehicle via the intake duct 1, an air conditioning unit 3 for conditioning the air taken in by the blower unit 2, a vent duct 4 via which the air which has passed through the air conditioning unit 3 is blown out from a top side of the vehicle compartment, and a foot duct 5 via which the air which has passed through the air conditioning unit 3 is blown out from a bottom side of the vehicle compartment.

As shown in FIG. 2, the air conditioning unit 3, the blower unit 2, and an upstream portion 6 of the foot duct 5 are disposed under the second seat 51 and below a floor 53 of the vehicle. On the other hand, the intake duct 1, the vent duct 4, and a downstream portion 7 of the foot duct 5 are disposed above the floor 53 in a manner embedded in a side panel, not shown, of the vehicle compartment.

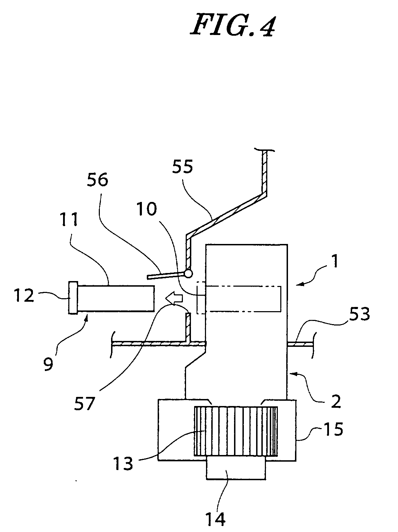

The intake duct 1 is formed with a port (recirculating air intake port) 8 for taking in recirculating air i.e. air from the compartment. Further, the intake duct 1 is formed with an opening 10, described in detail hereinafter, via which an electric heater 9 is mounted and removed (see FIG. 4). The electric heater 9 is comprised of a heating portion 11, a connector, not shown, and a stopper portion 12 for engaging with a peripheral edge portion of the opening 10 of the intake duct 1. The connector is connected to a battery, not shown, installed on the vehicle. The electric heater 9 converts electrical energy to heat, and the maximum output power of the electric heater 9 is equal to or more than 150 W.

The blower unit 2 is comprised of a fan 13, a motor 14 for driving the fan 13, and a blower unit casing 15 accommodating the fan 13 and the motor 14.

The air conditioning unit 3 is comprised of an evaporator 16, a heater core 17, an air-mixing door 18, a mode-switching door 19, and an air conditioning unit casing (unit casing) 20 accommodating the components 16 to 19.

The evaporator 16 is arranged at a location upstream of the heater core 17. The evaporator 16 has refrigerant pipes, not shown, connected thereto.

The heater core 17 is a heat exchanger utilizing engine coolant as its heat source. Connected to the heater core 17 are two hot water pipes, not shown, i.e. a hot water inlet pipe via which the engine coolant flows into the heater core 17 and a hot water outlet pipe via which the engine coolant flows out from the heater core 17. The two hot water pipes are connected to a water jacket (external heat source) of an internal combustion engine, not shown, installed on the vehicle. The water jacket is located under the front seat.

The air-mixing door 18 is swingably hinged at a location between the evaporator 16 and the heater core 17.

Within the air conditioning unit casing 20, there are formed a cold air bypass passage 21 through which air from the evaporator 16 flows, a hot air passage 22 through which air having passed through the heater core 17 flows, and an air-mixing space 23 in which the air from downstream of the cold air bypass passage 21 and the air from downstream of the hot air passage 22 are mixed with each other.

The air-mixing space 23 is located downstream of the air-mixing door 19.

The air conditioning unit casing 20 has a vent outlet port 24 and a foot outlet port 25 each formed at a location downstream of the air-mixing space 23. The mode-switching door (vent-foot switching door) 19 is swingably hinged at a location upstream of the two outlet ports 24, 25.

The vent duct 4 is formed with an outlet port 26, and the foot duct 5 is formed with outlet ports 27, 28.

Next, description will be made of how the air conditioning system is operated e.g. when the outlet mode is set to a bi-level mode.

When the bi-level mode is selected, the air-mixing door 18 and the mode-switching door 19 are each held in an intermediate position within a range of operation thereof.

When the motor 14 drives the fan 13, air is introduced into the intake duct 1 from the compartment of the vehicle. The air introduced into the intake duct 1 passes through the electric heater 9. When the heating power of the heater core 17 is insufficient, the electric heater 9 is operated as an auxiliary heat source to heat the air passing therethrough. After passing through the electric heater 9, the air flows toward the air conditioning unit 3 via the blower unit 2.

Part of the air which has passed through the evaporator 16 flows toward the air-mixing space 23 via the cold air bypass passage 21, while the rest of the air flows toward the heater core 17. The air passing through the evaporator 16 is cooled.

The air which has passed through the heater core 17 flows into the air-mixing space 23 via the hot air passage 22. The air passing through the heater core 17 is heated. Since the heater core 17 utilizes engine coolant as its heat source as described above, the engine coolant heated within the water jacket is sent to the heater core 17 via the hot water inlet pipe, and heat exchange is effected between the engine coolant and the air passing through the heater core 17. After the heat exchange, the engine coolant is returned from the heater core 17 to the water jacket via the hot water outlet pipe.

When the heating power of the heater core 17 is reduced due to heat dissipation from the engine coolant flowing through the hot water pipes or a decrease in the rate of circulation of the engine coolant caused by pressure loss within the hot water pipes, or when the temperature of the engine coolant is lowered due to switching of the drive force source from the internal combustion engine, not shown, to the motor, not shown, the electric heater 9 is operated to compensate for the shortage of the heating power of the heater core 17.

The air from downstream of the cold air bypass passage 21 and the air from downstream of the hot air passage 22 flow into each other to be mixed in the air-mixing space 23, followed by being blown out of the air conditioning unit casing 20 via the vent outlet port 24 and the foot outlet port 25. The flows of air blown out of the unit casing 20 pass through the vent duct and the foot duct, respectively, to be blown into the vehicle compartment via the outlet port 26 and the outlet ports 27, 28.

Next, description will be made of the procedure of removing the electric heater 9 from the intake duct 1 e.g. for maintenance of the same.

FIG. 4 shows part of the one-box vehicle on an enlarged scale, for explanation of the procedure of removing the electric heater 9 from the intake duct 1.

First, a door 56 attached to a side panel 55 of the vehicle compartment is opened, whereby an opening 57 formed in the side panel 55 is exposed.

Then, the connector of the electric heater 9 is unhooked via the opening 57 of the side panel 55.

Finally, the stopper portion 12 of the electric heater 9 is grasped, and the electric heater 9 is pulled out of the intake duct 1.

The procedure of mounting the electric heater 9 in the intake duct 1 is the reverse of the above removal procedure, and hence description thereof is omitted.

As described above, according to this embodiment, the intake duct 1 is disposed above the vehicle floor 53 and has the electric heater 9 installed therein, so that e.g. when it is required to carry out maintenance of the electric heater 9, it is possible to remove the electric heater 9 alone from the intake duct 1 without removing the air conditioning system from the vehicle and disassembling the same, which facilitates the operation of maintenance of the electric heater 9.

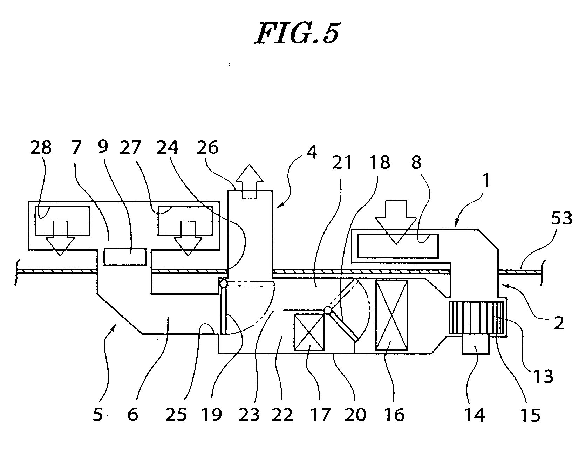

FIG. 5 is a conceptual representation of an air conditioning system installed on an automotive vehicle, according to a second embodiment of the invention.

Component parts and elements similar to those of the first embodiment are designated by identical reference numerals, and detailed description thereof is omitted.

The second embodiment is distinguished from the first embodiment, in which the electric heater 9 is installed in the intake duct 1, in that an electric heater 9 is installed in a downstream portion 7 of a foot duct 5.

In the present embodiment, the electric heater 9 is installed in the downstream portion 7 of the foot duct 5 which is located above the vehicle floor 53, and hence the electric heater 9 can be removed from and mounted in the downstream portion 7 e.g. when it is required to carry out maintenance of the same.

Next, description will be made of how the air conditioning system is operated e.g. when the outlet mode is set to a fully cooling mode.

When the fully cooling mode is selected, an air-mixing door 18 is closed to block an upstream side of the heater core 17, and a mode-switching door 19 is held in a vent-selecting position thereof to close a foot outlet port 25 and open a vent outlet port 26.

The air which has passed through an evaporator 16 all flows toward an air-mixing space 23 via a cold air bypass passage 21 to be blown into the vehicle compartment via a vent duct 4. In the fully cooling mode, since the electric heater 9 is not positioned on the air path, airflow resistance due to presence of the electric heater 9 cannot be incurred.

The second embodiment provides the same effect as obtained by the first embodiment. Further, in the fully cooling mode, the flow rate of air blown out from the vent duct 4 is not reduced.

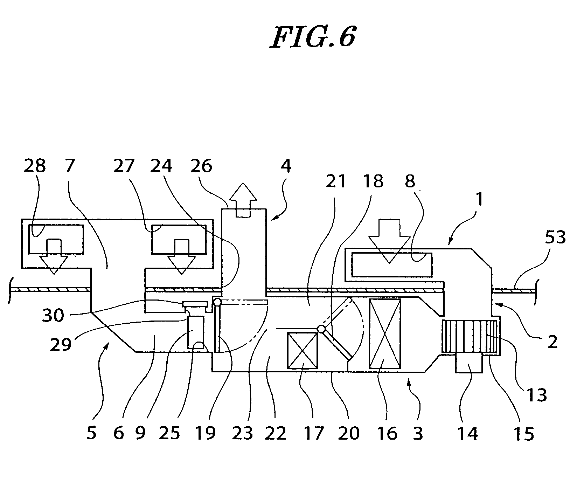

FIG. 6 is a conceptual representation of an air conditioning system installed on an automotive vehicle, according to a third embodiment of the invention. Component parts and elements similar to those of the FIG. 5 embodiment are designated by identical reference numerals, and detailed description thereof is omitted.

In the third embodiment, an electric heater 9 is installed in an upstream portion 6 of a foot duct 5.

The upstream portion 6 of the foot duct 5 is formed with an opening 29 for use in mounting the electric heater 9. The opening 29 has a lid 30 attached thereto.

According to this embodiment, since the electric heater 9 is not positioned on the air path in the fully cooling mode, airflow resistance due to presence of the electric heater 9 cannot be incurred.

Next, description will be made of the procedure of mounting the electric heater 9 in the upstream portion 6 of the foot duct 5 after completion of mounting of the air conditioning system in the one-box vehicle.

First, a carpet, not shown, a floor panel, not shown, and a heat insulator, not shown, are removed from the floor 53 within the vehicle compartment. This causes the foot duct 5 to be exposed.

Then, the lid 30 of the foot duct 5 is opened, whereby the opening 29 of the duct 5 is exposed.

Thereafter, the electric heater 9 is mounted in the foot duct 5.

Finally, the lid 30 is closed, and the heat insulator, the floor panel, and the carpet are attached to the floor 53 in the mentioned order.

In the present embodiment, the electric heater 9 is disposed within the upstream portion 6 of the foot duct 5, which is formed with the opening 29, so that the electric heater 9 can be mounted in the upstream portion 6 via the opening 29.

Thus, this embodiment makes it possible to mount the electric heater 9 in the air conditioning system without disconnecting refrigerant pipes, hot water pipes, and the like from the air conditioning system and removing the air conditioning system from the vehicle.

Further, the present embodiment is distinguished from the above embodiments, in which the electric heater 9 is disposed above the vehicle floor 53, and hence the cross-sectional area of an airflow passage of the foot duct 5 is required to be reduced so as to maintain a passenger space, in that since the electric heater 9 is disposed in the upstream portion 6 of the foot duct 5 which is located below the floor 53, it is possible to secure a large cross-sectional area of the airflow passage of the foot duct 5. Therefore, in the third embodiment, an increase in airflow resistance within the foot duct 5 can be held low in spite of the presence of the electric heater 9 in the foot duct 5.

Moreover, this embodiment makes it possible to prevent a decrease in the flow rate of the air blown out via the vent duct 4 in the fully cooling mode.

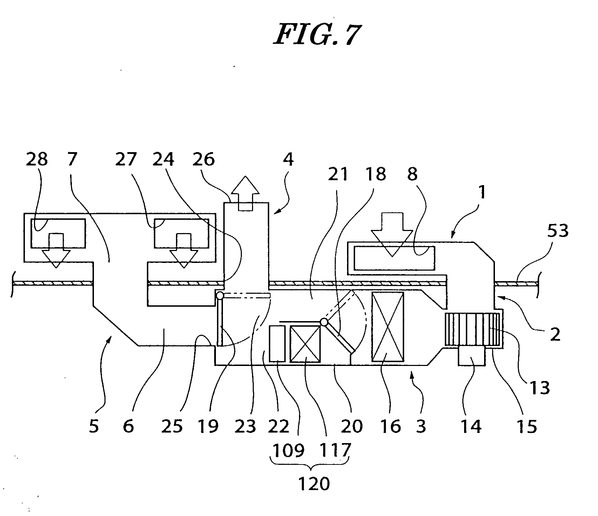

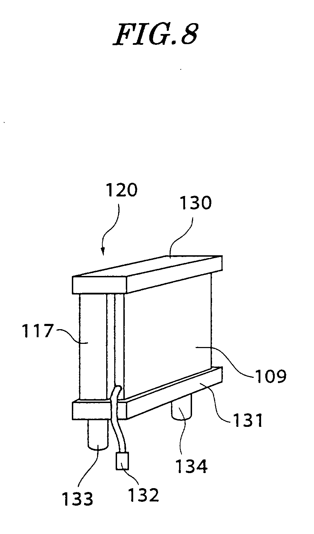

FIG. 7 is a conceptual representation of an air conditioning system installed on an automotive vehicle, according to a fourth embodiment of the invention, and FIG. 8 is a perspective view showing a heater core having an electric heater combined therewith. Component parts and elements similar to those of the FIG. 6 embodiment are designated by identical reference numerals, and detailed description thereof is omitted.

The present embodiment is distinguished from the FIG. 6 embodiment, in which the electric heater 9 and the heater core 17 are disposed separately from each other, in that an electric heater block 109 and a hot water heater block 117 are arranged in a manner opposed to each other and combined to form a one-piece assembly, i.e. a compound heater 120. As shown in FIG. 8, the compound heater 120 is comprised of the hot water heater block 117, the electric heater block 109, hot water tanks 130, 131, and a connector 132.

The hot water heater block 117 utilizes engine coolant as its heat source for heating air, while the electric heater block 109 converts electrical energy to heat for heating air.

The electric heater block 109 has the connector 132 attached thereto. The hot water tank 131 is formed with an engine coolant inlet port 133 and an engine coolant outlet port 134. The engine coolant inlet port 133 has a hot water inlet pipe, not shown, connected thereto, while the engine coolant outlet port 134 has a hot water outlet pipe, not shown, connected thereto. The connector 132 is connected to a battery, not shown.

In the present embodiment, the compound heater 120 includes the electric heater block 109 and the hot water heater block 117 combined into a one-piece assembly as described above, so that in assembling the air conditioning system, it is not required to mount the electric heater 109 and the hot water heater 117 separately in an air conditioning unit casing 20.

Further, since the compound heater 120 is not positioned on the air path in the fully cooling mode, airflow resistance due to presence of the compound heater 120 cannot be incurred.

According to this embodiment, since it is not required to mount the heater core 17 and the electric heater 9 separately in the air conditioning unit casing 20 as in the above embodiments, the number of steps of assembly work of the air conditioning system can be reduced.

Further, the fourth embodiment makes it possible to prevent a decrease in the flow rate of air blown out via the vent duct 4 in the fully cooling mode.

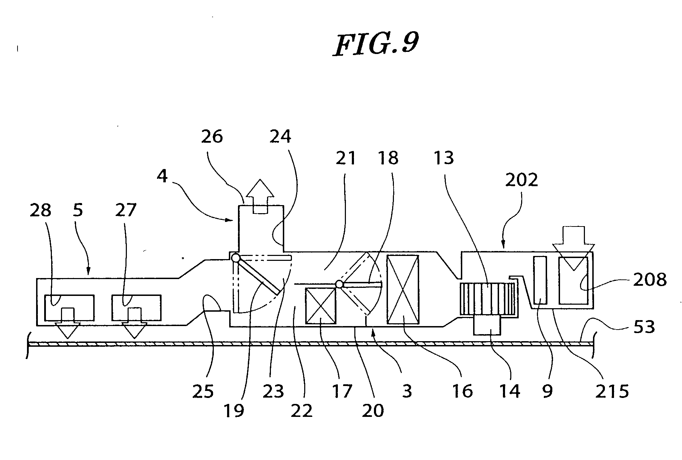

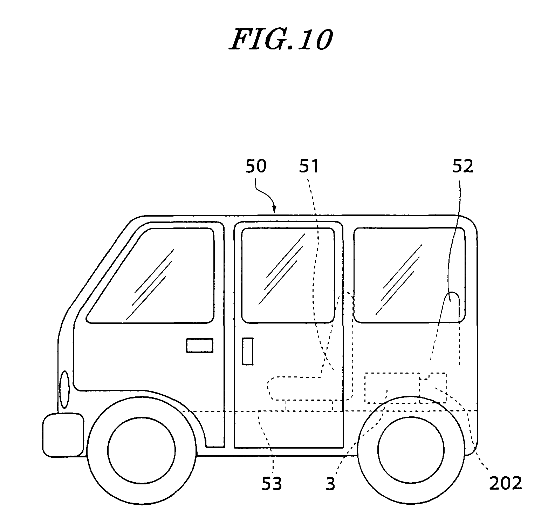

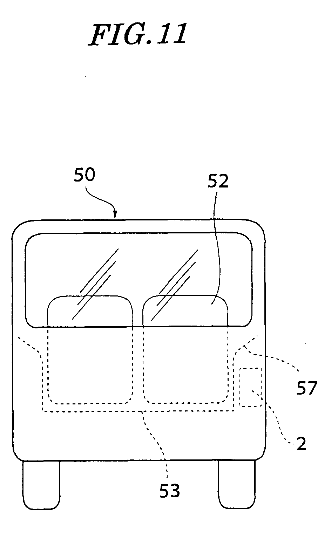

FIG. 9 is a conceptual representation of an air conditioning system installed on an automotive vehicle, according to a fifth embodiment of the invention. FIG. 10 is a side view of a one-box vehicle, while FIG. 11 is a rear view of the same. Component parts and elements similar to those of the FIG. 7 embodiment are designated by identical reference numerals, and detailed description thereof is omitted.

This embodiment is distinguished from the FIG. 7 fourth embodiment described above, in which the air conditioning system includes the intake duct 1, the blower unit 2, the vent duct 4, and the foot duct 5, with the intake duct 1, the vent duct 4, and the downstream portion 7 of the foot duct 5 each located above the vehicle floor 53, and the blower unit 2, the air conditioning unit 3, and the upstream portion 6 of the foot duct 5 each located below the vehicle floor 53, in that a blower unit 202, an air conditioning unit 3, a vent duct 4, and a foot duct 5 are all disposed above the vehicle floor 53.

Further, the present embodiment is distinguished from the FIG. 7 embodiment using the compound heater 120 disposed within the air conditioning unit casing 20, in that a heater core 17 and an electric heater 9 are formed as separate devices independent of each other, with the heater core 17 being disposed within an air conditioning unit casing 20, and the electric heater 9 being disposed within a blower unit casing 215.

The blower unit 202, the air conditioning unit 3, the vent duct 4, and the foot duct 5 are disposed beside the third seat 52 in a manner embedded in a side panel, not shown, of the one-box vehicle 50 (see FIGS. 10, 11).

The blower unit casing 215 is formed with a port 208 for introducing recirculating air.

The electric heater 9 is mounted within the blower unit 202.

When the motor 14 drives the fan 13, air is introduced into the blower unit 202 from the vehicle compartment. The air introduced into the blower unit 202 passes through the electric heater 9. When the heating power of the heater core 17 is insufficient, the electric heater 9 is operated to heat the air passing therethrough. After passing through the electric heater 9, the air flows toward the air conditioning unit 3.

According to this embodiment, the blower unit 202 is disposed above the vehicle floor 53 and has the electric heater 9 arranged therein, so that e.g. when it is required to carry out maintenance of the electric heater 9, it is possible to remove and mount the electric heater 9 alone from and in the blower unit 202 without removing the air conditioning system from the vehicle, which facilitates the operation of maintenance of the electric heater.

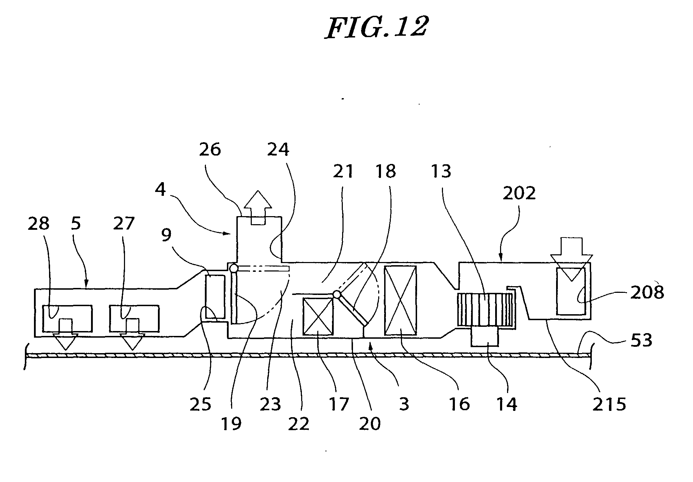

FIG. 12 is a conceptual representation of an air conditioning system installed on an automotive vehicle, according to a sixth embodiment of the invention. Component parts and elements similar to those of the FIG. 9 embodiment are designated by identical reference numerals, and detailed description thereof is omitted.

This embodiment is similar to the fifth embodiment in that the whole air conditioning system is arranged above the vehicle floor 53, but distinguished therefrom in that an electric heater 9 is not disposed within the blower unit 202 but disposed within a foot duct 5.

Therefore, e.g. when it is required to carry out maintenance of the electric heater 9, it is possible to remove and mount the electric heater 9 alone from and in the foot duct 5 without removing the air conditioning system from the vehicle.

Further, since the electric heater 9 is not positioned on the air path in the fully cooling mode, airflow resistance due to presence of the electric heater 9 cannot be incurred.

Thus, the sixth embodiment provides the same effects as obtained by the second embodiment.

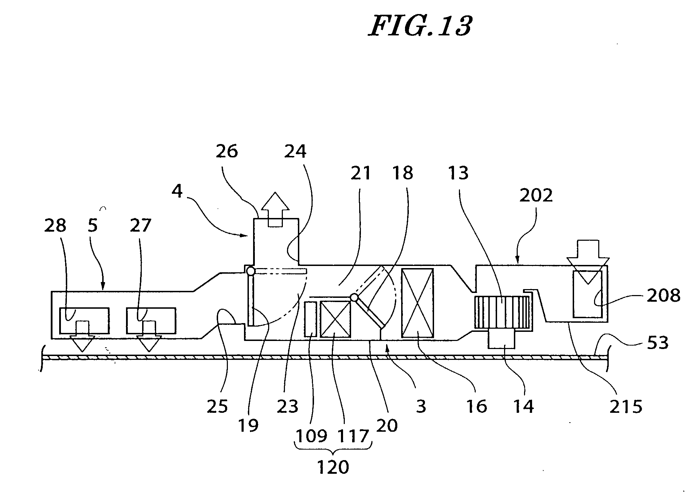

FIG. 13 is a conceptual representation of an air conditioning system installed on an automotive vehicle, according to a seventh embodiment of the invention. Component parts and elements similar to those of the FIG. 12 embodiment are designated by identical reference numerals, and detailed description thereof is omitted.

The present embodiment is distinguished from the FIG. 12 embodiment, in which the electric heater 9 and the heater core 17 are disposed separately away from each other, in that an electric heater block 109 and a hot water heater block 117 arranged in a manner opposed to each other and combined to form a one-piece assembly, i.e. a compound heater 120.

The seventh embodiment can provide the same effects as obtained not only by the first embodiment, but also by the fourth embodiment.

Although in each of the above first to seventh embodiments, the air conditioning system of the invention is installed on a hybrid vehicle, this is not limitative, but the invention is also applicable to an automotive vehicle equipped with a gasoline-powered engine, a diesel-powered engine, or the like.

Further, although in the above embodiments, the air conditioning system is arranged under the second seat 51 or beside the third seat 52, this is not limitative, but it is possible to arrange the air conditioning system beside the second seat 51 or under the third seat 52.

Further, the number of the ports formed in the intake duct 1, the vent duct 4, the foot duct 5, and the blower unit 202 is not limited. Moreover, it is possible to install a plurality of electric heaters in a single air conditioning system.

It is further understood by those skilled in the art that the foregoing are preferred embodiments of the invention, and that various changes and modification may be made without departing from the spirit and scope thereof.

## Claims

1. An air conditioning system for an automotive vehicle having a compartment and a floor, the air conditioning system comprising an intake duct (1) formed with a recirculating air intake port (8) arranged to take in air from the vehicle compartment, a blower unit (2) arranged to draw air from the vehicle compartment via the intake duct (1), and an air conditioning unit (3) having a heat exchanger (17) arranged to utilize engine coolant as a heat source thereof for heating air from the blower unit (2),
CHARACTERIZED IN THAT the intake duct (1) is arranged to be disposed above the vehicle floor;
the air conditioning unit (3) is arranged to be disposed below the vehicle floor; and
an electric heater (9) is arranged within the intake duct (1), as an auxiliary heat source.

2. An air conditioning system according to claim 1, wherein the intake duct (1) is formed with an opening (10) via which the electric heater (9) can be mounted and removed.

3. An air conditioning system for an automotive vehicle having a compartment and a floor, the air conditioning system comprising an air conditioning unit (3) having a heat exchanger (17) arranged to utilize engine coolant as a heat source thereof, a unit casing (20) accommodating the heat exchanger (17), a vent outlet port (24) and a foot outlet port (25) formed in the unit casing (20), and a vent-foot switching door (19) for opening and closing the vent outlet port (24) and the foot outlet port (25), a vent duct (4) connected to the vent outlet port (24) and arranged to guide air blown out from the vent outlet port (24) to the vehicle compartment, and a foot duct (5) connected to the foot outlet port (25) and arranged to guide air blown out from the foot outlet port (25) to the vehicle compartment,
CHARACTERIZED IN THAT the air conditioning unit (3) is arranged to be disposed below the vehicle floor, and
an electric heater (9) is arranged within the foot duct (5), as an auxiliary heat source.

4. An air conditioning system according to claim 3, wherein the foot duct (5) has a downstream portion (7) arranged to be located above the vehicle floor and wherein the electric heater (9) is disposed within the downstream portion (7) of the foot duct (5).

5. An air conditioning system according to claim 3, wherein the foot duct (5) has an upstream portion (6) arranged to be located below the vehicle floor and a downstream portion (7) arranged to be located above the vehicle floor and wherein the electric heater (9) is disposed within the upstream portion (6) of the foot duct (5), the upstream portion (6) of the foot duct (5) being formed with an opening (29) via which the electric heater (9) can be mounted and removed.

6. An air conditioning system for an automotive vehicle having a compartment and a floor, the air conditioning system comprising an air conditioning unit (3) having a heat exchanger (17) arranged to utilize engine coolant as a heat source thereof, a unit casing (20) accommodating the heat exchanger (17), a vent outlet port (24) and a foot outlet port (25) formed in the unit casing (20), and a vent-foot switching door (19) arranged to open and close the vent outlet port (24) and the foot outlet port (25), a vent duct (4) connected to the vent outlet port (24) and arranged to guide air blown out from the vent outlet port (24) to the vehicle compartment, and a foot duct (5) connected to the foot outlet port (25) and arranged to guide air blown out from the foot outlet port (25) to the vehicle compartment,
CHARACTERIZED IN THAT the air conditioning unit (3) is arranged to be disposed below the vehicle floor, and
an electric heater (109) is combined as an auxiliary heat source with the heat exchanger (117) to form a one-piece assembly (120).

7. An air conditioning system for an automotive vehicle having a compartment and a floor, the air conditioning system comprising a blower unit (2) arranged to draw air from the vehicle compartment, an air conditioning unit (3) having a heat exchanger (17) arranged to utilize engine coolant as a heat source thereof for heating air sent from the blower unit (2), a unit casing (20) accommodating the heat exchanger (17), a vent outlet port (24) and a foot outlet port (25) formed in the unit casing (20), and a vent-foot switching door (19) arranged to open and close the vent outlet port (24) and the foot outlet port (25), a vent duct (4) connected to the vent outlet port (24) and arranged to guide air blown out from the vent outlet port (24) to the vehicle compartment, and a foot duct (5) connected to the foot outlet port (25) and arranged to guide air blown out from the foot outlet port (25) to the vehicle compartment,
CHARACTERIZED IN THAT the blower unit (2), the air conditioning unit (3), the vent duct (4) and the foot duct (5) are arranged to be disposed above the vehicle floor, and
an electric heater (9) is arranged in one of the blower unit (2), the air conditioning unit (3), the vent duct (4) and the foot duct (5), as an auxiliary heat source,

8. An air conditioning system according to claim 7, wherein said electric heater (9) is disposed within the blower unit (2),

9. An air conditioning system according to claim 7, wherein the electric heater is disposed within the foot duct (5),

10. An air conditioning system according to claim 7, 8 or 9, wherein the blower unit (2), the air conditioning unit (3), the vent duct (4) and the foot duct (5) can be arranged within a side panel of the vehicle compartment,

11. An air conditioning system for an automotive vehicle having a compartment and a floor, the air conditioning system comprising a blower unit (2) arranged to draw air from the vehicle compartment, an air conditioning unit (3) having a heat exchanger (17) arranged to utilise engine coolant as a heat source thereof for heating air sent from the blower unit (2), a unit casing (20) accommodating the heat exchanger (17), a vent outlet port (24) and a foot outlet port (25) formed in the unit casing (20), and a vent-foot switching door (19) arranged to open and close the vent outlet port (24) and the foot outlet port (25), a vent duct (4) connected to the vent outlet port (24) and arranged to guide air blown out from the vent outlet port (24) to the vehicle compartment, and a foot duct (5) connected to the foot outlet port (25) and arranged to guide air blown out from the foot outlet port (25) to the vehicle compartment,
CHARACTERIZED IN THAT the air conditioning unit (3) is arranged to be disposed above the vehicle floor, and
an electric heater (109) is combined as an auxiliary heat source with the heat exchanger (117) to form a one-piece assembly (120).

12. An air conditioning system according to claim 11, wherein the blower unit (2), the vent duct (4) and the foot duct (5) are also arranged to be disposed above the vehicle floor.

13. An air conditioning system according to claim 11 or 12, wherein the blower unit (2), the air conditioning unit (3), the vent duct (4) and the foot duct (5) can be arranged within a side panel of the vehicle compartment.

14. An automotive vehicle comprising a compartment and a floor and incorporating an air conditioning system according to any preceding claim.
